Europäisches Patentamt

European Patent Office

Office européen des brevets

(11) Veröffentlichungsnummer: **0 174 526**
**B1**

## EUROPÄISCHE PATENTSCHRIFT

(45) Veröffentlichungstag der Patentschrift: **11.07.90**

(21) Anmeldenummer: **85110492.7**

(22) Anmeldetag: **21.08.85**

(51) Int. Cl.⁵: **H 01 M 10/34**, H 01 M 4/24

(54) **Gasdicht verschlossener Nickel-Cadmium-Akkumulator.**

(30) Priorität: **13.09.84 DE 3433544**

(43) Veröffentlichungstag der Anmeldung:
**19.03.86 Patentblatt 86/12**

(45) Bekanntmachung des Hinweises auf die
Patenterteilung:
**11.07.90 Patentblatt 90/28**

(84) Benannte Vertragsstaaten:
**CH DE FR GB LI SE**

(56) Entgegenhaltungen:
US-A-3 024 296
US-A-3 438 812

JOURNAL OF POWER SOURCES, Band 8, Nr. 1,
Juli 1982, Seiten 3-8, Elsevier Sequoia,
Lausanne, CH; J. MRHA et al.: "Plastic-bonded
electrodes for nickel-cadmium accumulators.
VIII. Study of oxygen recombination rate on
plastic-bonded cadmium electrodes provided
with active carbon catalyst"

(73) Patentinhaber: **VARTA Batterie
Aktiengesellschaft
Am Leineufer 51
D-3000 Hannover 21 (DE)**

(72) Erfinder: **Simon, Gerhard
Münsterer Strasse 48
D-6233 Kelkheim (DE)**

(74) Vertreter: **Kaiser, Dieter Ralf, Dipl.-Ing.
Gundelhardtstrasse 72
D-6233 Kelkheim/Ts. (DE)**

(56) References cited:
**CHEMICAL ABSTRACTS, Band 100, Nr. 20, Mai
1984, Seite 178, Zusammenfassung Nr. 159560n,
Columbus, Ohio, US; & CS-A-222 761 (J.
JINDRA et al.) 01-02-1984**

## Beschreibung

Die Erfindung betrifft einen gasdicht verschlossenen Nickel-Cadmium-Akkumulator mit porösen Elektroden entgegengesetzter Polarität und einem zwischenliegenden porösen Separator.

Akkumulatoren dieser Art können ohne elektrochemische Reduktion des bei Überladung entwickelten Sauerstoffs nicht gefahrlos betrieben werden. Als Mittel, welche diese Reduktion leisten, können Hilfselektroden eingesetzt werden. Sie besitzen häufig eine unabhängige Stromzuleitung und können in diesem Fall auch zur Feststellung von Sauerstoff und Wasserstoff dienen, oder sie üben z.B. die Funktion einer Vergleichselektrode aus, welche bei Überschreiten einer vorgegebenen Potentialschwelle die erreichte Volladung signalisiert.

In ihrer Eigenschaft als Sauerstoffverzehrelektroden sind Hilfselektroden vorzugsweise porös, damit sich eine möglichst große Oberfläche für die Sauerstoffreduktion ergibt. Um das hierzu erforderliche Potential einzustellen, genügt es, sie mit der negativen Akkumulatorelektrode elektrisch kurzzuschließen.

Bekannte Sauerstoff-Hilfselektroden bestehen aus einem weitgehend inerten Metall und sind gitter- oder netzartig ausgebildet. Ferner gibt es poröse Gewebe-bzw. Kunststoffstrukturen, in die geeignete Katalysatoren eingelagert sind. Letztere liegen in ihrer flächigen Ausdehnung zweckmäßig der negativen Hauptelektrode unmittelbar an und können darüber hinaus wie die aus der DE-OS 28 26 780 bekannte Hilfselektrode nach dem Prinzip einer Luftkathode zur Hauptelektrode hin eine die Sauerstoffreduktion katalysierende hydrophile Schicht und eine von der Hauptelektrode abgewandte hydrophobe-Schicht aufweisen.

Mit Rücksicht darauf, daß sich die Sauerstofreduktion an einer Dreiphasengrenze Gas-Elektrolyt-Festkörper vollziehen muß, ist das meist kohle- oder silberhaltige Katalysatormaterial zumindest bei Zellen mit freiem Elektrolyten möglichst im Gasraum oder wenigstens nahe demselben angeordnet.

Bei gasdichten Nickel-Cadmium-Sinterzellen (Rundzellen) hat es sich gezeigt, daß bei einer sorgfältig eingestellten Zellenbalance, d.h. richtig bemessener Lade- und Entladereserve, allein das an den Rändern der Cadmiumelektrode stellenweise freiliegende Nickel-Sintergerüst den Sauerstoffumsatz katalytisch so stark beeinflußt, daß diese Zellen auch ohne zusätzliche Maßnahmen zur Unterstützung des Sauerstoff verzehrs überladesicher betrieben werden können. Dagegen tritt bei einem Austausch der negativen Sinterelektroden gegen Cadmiumelektroden anderen Aufbaus beispielsweise vom sog. electro-deposit-Typ eine deutliche Verschlechterung des Sauerstoffverzehrmechanismus auf. Elektroden der nämlichen Art werden nach einem speziellen, der DE-OS 28 22 821 entnehmbaren Verfahren gefertigt, bei dem zunächst in einem elektrolytischen Bad mit einem darin gelösten Cadmiumsalz ein perforiertes Nickelband eine Cadmiumbeschichtung erhält und bei dem das Band anschließend außerhalb des elektrolytischen Troges zwischen Kalanderwalzen hindurchgeführt wird, so daß sich die anfangs pulvrige und wenig haftende Schicht des aktiven Metalls festigt. Derartige Cadmiumelektroden und andere Cadmiumpresselektroden besitzen gegenüber Sinterelektroden gewisse Nachteile, was die Fähigkeit der raschen Stromaufnahme anbelangt.

Aufgabe der Erfindung ist es, die Ladbarkeit der eingangs genannten Akkumulatoren mit hohen Strömen zu verbessern.

Diese Aufgabe wird erfindungsgemäß mit Hilfe der im Anspruch 1 angegebenen Maßnahme gelöst.

Ein besonderer Vorteil der Erfindung besteht darin, daß die negative Elektrode unmittelbar im Zuge ihrer Herstellung so präpariert wird, daß sie zumindest auf einer ihrer Oberflächen die aktive Elektrodenfunktion und die Funktion einer die Sauerstoffreduktion katalysierenden Hilfselektrode vereinigt. Damit entfällt die Notwendigkeit der Einfügung einer besonderen Sauerstoff-Hilfselektrode zwischen die Hauptelektroden und vor allem die separate Anfertigung einer solchen Hilfselektrode.

Das auf der negativen Elektrode vorhandene und ihre Oberfläche gleichmäßig durchsetzende kohlehaltige Katalysatormaterial sollte erfindungsgemäß in einer Menge von 0,2 bis 0,8 g pro $dm^2$ (einseitige Oberfläche), vorzugsweise jedoch mit ca. 0,4 g pro $dm^2$ vorliegen. Es hat sich nämlich gezeigt, daß die letztgenannte Menge den Oberflächenzustand der negativen Elektrode gerade indem Ausmaß verändert, daß bei Hochstromentladungen von erfindungsgemäß ausgestatteten Zellen bei Strömen bis zu i=10 CA kein Qualitätsunterschied gegenüber Zellen mit nichtkatalysierten negativen Elektroden festzustellen ist, und daß ebenso die erfindungsgemäßen Zellen mit i=I CA geladen werden können, ohne daß unzulässig hohe Sauerstoffdrucke auftreten.

Mit der Maßgabe 0,4 g Verzehrmasse pro $dm^2$ korrespondiert ein bestimmter "Bedeckungsgrad" der Elektrodenfläche. Dieser muß so klein sein, daß die Fähigkeit zur Hochstromentladung erhalten bleibt, er muß andererseits genügend groß sein, damit der Sauerstoffverzehr in Gang kommt. Dieser verzögert sich zunehmend bei hohen Strömen infolge der dann bereits erheblichen Polarisation der Cadmiumelektrode. Die Gefahr, daß der schleppende Sauerstoffverzehr von einer beginnenden Wasserstoffentwicklung an der Cadmiumelektrode überholt wird, ist dabei groß.

Wird für einen vorgesehenen Anwendungsfall keine Ladbarkeit mit hohen Strömen verlangt, kann man die einzusetzende Verzehrmasse reduzieren. Sie wird hingegen zweckmäßig erhöht, wenn die Hochstromladbarkeit intessant, die Hochstromentladbarkeit jedoch nicht gefragt ist.

Das als Verzehrmasse dienende kohlehaltige Material ist in seiner ursprünglichen Form ein trockenes Pulver und setzt sich aus etwa 58 bis 72 Gew.% Aktivkohle, 8 bis 12 Gew.% Ruß und 22 bis 28 Gew.% PTFE zusammen.

Die Präparierung de Cadmiumelektrode mit diesem Material geschieht zunächst durch gleichmäßiges Aufstreuen oder Pudern und anschließend durch Einwalzen der Ablagerung in die Elektrodenoberfläche. Zum Aufbringen der Masse kommen bei einer automatisierten Fertigung mit hohem Ausstoß auch eine vibrierende Dosiervorrichtung oder eine elektrostatisch betriebene Wirbelbettanlage in Betracht.

Besonders günstig ist es, die Elektrode vor der Einstäubung mit einer Tylose® Dispersion zu befeuchten. (Der Handelsname "Tylose" steht für wasserlösliche Celluloseäther, die allgemein als Verdickungs-, Binde und Suspendiermittel Verwendung finden und bei denen man zwischen zwei Hauptgruppen, den Methylcellulosen und den Carboxymethylcellulosen, unterscheidet). Diese Maßnahme hat einerseits den Vorteil, daß Tylose die Alterung der Cadmium-Masse hemmt. Andererseits wirkt die Tylose als Kleber, verhindert die Abschlammung und stellt damit die Qualität der erfindungsgemäßen Elektrode auch für längere Zeit sicher.

Die Oberflächenstruktur der erfindungsgemäßen Cadmiumelektrode wird man sich makroskopisch in der Art eines Flickenteppichs vorzustellen haben, indem unregelmäßig geformte "Inseln" des kohlehaltigen Materials sich mit solchen aus freiliegendem Cadmium bzw. Cadmiumhydroxid in statistischer Verteilung ablösen. Aufgrund der Verzehrmasse-Zusammensetzung aus hydrophilen Komponenten Aktivkohle und Ruß einerseits sowie der hydrophoben Komponente PTFE andererseits ist jedes einzelne Partikel hydrophil und hydrophob zugleich. Damit liegen an jedem Ort der Elektrodenoberfläche und letztlich in der unmittelbaren Nachbarschaft eines jeden Cadmiumteilchens Bedingungen vor, welche sowohl für die eigentliche Elektrodenreaktion als auch für das Funktionieren des Sauerstoffverzehrs förderlich sind und die bekannte, schichtähnlich gestaltete Einrichtungen für den Sauerstoffverzehr nicht aufweisen, indem sich ausgedehnte hydrophile und hydrophobe Bereiche dort in größerem Abstand voneinander und zu dem aktiven Cadmium befinden.

**Patentansprüche**

1. Gasdicht verschlossener Nickel-Cadmium-Akkumulator mit porösen Elektroden entgegengesetzter Polarität, wobei die negative Elektrode mit einer Auflage aus einem Aktivkohle zur katalytischen Sauerstoffrekombination enthaltenden Material versehen ist, und einem zwischenliegenden porösen Separator, dadurch gekennzeichnet, daß das aktivkohlehaltige Material zumindest in eine der Elektrodenoberflächen und in einer nur zu einer teilweisen Flächenbedeckung ausreichenden Menge, welche 0,2 bis 0,8 g/dm², vorzugsweise 0,4 g/dm² beträgt, derart eingewalzt ist, daß die Elektrode eine von Inseln aus freiliegendem Cadmium bzw. Cadmiumhydroxid und aktivkohlehaltigem Material, die sich in statistischer Verteilung ablösen, gebildete Oberflächenstruktur besitzt.

2. Akkummulator nach Anspruch 1, dadurch gekennzeichnet, daß das aktivkohlehaltige Material eine Pulver-Mischung aus etwa 58—72 Gew.% Aktivkohle, 8—12 Gew.% Ruß und 22—28 Gew.% PTFE ist.

3. Akkumulator nach Anspruch 1 oder 2, dadurch gekennzeichnet, daß die negative Elektrode eine durch kathodische Metallabscheidung aus Cadmiumsalzlösungen hergestellte Cadmiumelektrode ist.

4. Verfahren zur Herstellung eines Akkumulators nach einem der Ansprüche 1 bis 3, dadurch gekennzeichnet, daß das aktivkohlehaltige Material durch Pudern, mittels einer vibrierenden Dosiervorrichtung oder in einer elektrostatisch betriebenen Wirbelbettanlage auf die Elektrodenoberfläche gleichmäßig aufgebracht und die Ablagerung anschließend in die Elektrodenoberfläche eingewalzt wird.

5. Verfahren nach Anspruch 4, dadurch gekennzeichnet, daß die negative Elektrode vor dem Auftragen des aktivkohlehaltigen Materials mittels einer wässrigen Dispersion eines Celluloseäthers befeuchtet wird.

**Revendications**

1. Accumulateur nickel-cadmium étanche aux gaz avec électrodes poreuses de polarité opposée, l'électrode négative étant pourvue d'un revêtement d'un matériau contenant du charbon activé pour la combinaison catalytique de l'oxygène, et un séparateur intermédiaire poreux, caractérisé en ce que le matériau contenant du charbon activé est imprégné au cylindre au moins dans l'une des surfaces d'électrode et en un recouvrement partiel de surface en une quantité suffisante, qui est de 0,2 à 0,8 g/dm², avantageusement de 0,4 g/dm², de manière que l'électrode possède une structure de surface formée d'îles de cadmium libre ou respectivement hydroxyde de cadmium et du matériau contenant le charbon activé, qui se détachent en une répartition statistique.

2. Accumulateur selon la revendication 1, caractérisé en ce que le matériau contenant du charbon activé est un mélange en poudre d'environ 58—72% en poids de charbon activé, 8—12% en poids de suie et 22—28% en poids de PTFE.

3. Accumulateur selon la revendication 1 ou 2, caractérisé en ce que l'électrode négative est une électrode en cadmium fabriquée par séparation métallique cathodique de solutions de sel de cadmium.

4. Procédé pour la fabrication d'un accumulateur selon l'une des revendications 1 à 3, caractérisé en ce que le matériau contenant du charbon activé est porté régulièrement sur la surface de l'électrode par poudrage, au moyen d'un dispositif vibrant de dosage ou bien dans un système à lit fluidisé à commande électrostatique, et le dépôt est ensuite imprégné dans la surface de l'électrode, au cylindre.

5. Procédé selon la revendication 4, caractérisé en ce que l'électrode négative est humidifiée, avant d'y apporter le matériau contenant du charbon activé, au moyen d'une dispersion aqueuse d'un éther de cellulose.

**Claims**

1. Nickel-cadmium accumulator sealed in a gas-tight way with porous electrodes of opposite polarity, the negative electrode being provided with a coating of a material containing an activated carbon for catalytic oxygen recombination, and an interposed porous separator, characterized in that the material containing activated carbon is rolled in, at least into one of the electrode surfaces and in an amount adequate only for a partial surface coverage, which is 0.2 to 0.8 g/dm$^2$, preferably 0.4 g/dm$^2$, in such a way that the electrode has a surface structure formed by islands of exposed cadmium or cadmium hydroxide and material containing activated carbon, which alternate in random distribution.

2. Accumulator according to Claim 1, characterized in that the material containing activated carbon is a powder mixture of about 58—72% by weight activated carbon, 8—12% by weight carbon black and 22—28% by weight PTFE.

3. Accumulator according to Claim 1 or 2, characterized in that the negative electrode is a cadmium electrode produced from cadmium salt solutions by cathodic metal deposition.

4. Process for the production of an accumulator according to one of Claims 1 to 3, characterized in that the material containing activated carbon is evenly applied to the electrode surface by powdering, by means of a vibrating metering device or in an electrostatically operated fluidized bed unit, and the deposition is subsequently rolled into the electrode surface.

5. Process according to Claim 4, characterized in that the negative electrode is moistened by means of an aqueous dispersion of a cellulose ether before the application of the material containing activated carbon.